# EUROPEAN PATENT APPLICATION

(11) **EP 4 438 142 A1**
(43) Date of publication of application: **02.10.2024**
(21) Application number: 24157903.6
(22) Date of filing: 15.02.2024
(51) Int. Cl.: A63F 13/285, A63F 13/424

(54) **SYSTEM AND METHOD FOR PROVIDING HAPTIC FEEDBACK**

(30) Priority: 02.03.2023 GB 202303085
(71) Applicant: Sony Interactive Entertainment Inc., Tokyo 108-0075 (JP)
(72) Inventor: HENDERSON, Christopher, London, W1F 7LP (GB); BARCIAS, Jesus, London, W1F 7LP (GB)
(74) Representative: D Young & Co LLP

(57) **Abstract**

A system for providing haptic feedback accompanying media content, the system comprising: an input unit configured to obtain one or more audio components of the media content; a classification unit configured to determine, from the one or more audio components, a most prominent audio component representative of a scene in the media content, and a haptics generation unit configured to generate an output haptics signal based on the most prominent audio component.

## Description

### TECHNICAL FIELD

The following disclosure relates to systems and methods for providing haptic feedback accompanying media content, and in particular to systems and methods for providing haptic feedback accompanying video game environments.

### BACKGROUND

The advent of haptics technology in recent years has added a new dimension to consumer enjoyment of media content. Haptics actuators arranged in direct or indirect communication with the user can be configured to provide rumble, vibration or other tactile feedback to the user in combination with audio-visual media content to deliver an immersive overall experience. Such haptic feedback is increasingly used for example in video games, not only to provide improved immersion but also as an additional form of communicating in-game events and actions to the user.

Recent advancements in haptic technologies have enabled the output of more complex haptic feedback, with actuators driven by finely tuned signals designed to closely match the media content in real-time and communicate a wide range of tactile sensations.

Many content producers such as video game development studios have made use of the new haptics capabilities available in modern game systems, incorporating complex haptics signals into their newer titles to be enjoyed on the advanced platforms. However, not all games being played on such platforms have been designed with the detailed haptics signals needed to provide the desired output from the actuators. For example, some users play old games developed many years before the advent of modern haptics actuators - therefore lacking the necessary haptics content needed to drive modern actuators to their full potential.

Some prior art solutions attempt to overcome this by simply routing the master audio output in its original or some attenuated form to the haptic actuators, so that they vibrate in sync with the audio currently being played. This is not an ideal solution, however, because most game environments comprise a huge number of sounds and the detail and relevance of the feedback can be obscured when a haptic actuator is made to vibrate to the overall audio output.

It is therefore desirable to provide systems and methods for generating high quality, relevant, haptic feedback for media content - without incurring excessive processing cost.

### SUMMARY OF THE INVENTION

According to an aspect of the disclosure, there is provided a system for providing haptic feedback accompanying media content, the system comprising: an input unit configured to obtain one or more audio components of the media content; a classification unit configured to determine, from the one or more audio components, a most prominent audio component representative of a scene in the media content, and a haptics generation unit configured to generate an output haptics signal based on the most prominent audio component.

An 'audio component' is intended to mean a part of the overall audio output. For example, if the media content is a scene of a character in a forest, the audio output may comprise background ambience (e.g., sounds of the wind, trees, birds), background music, foreground effects (e.g., character footsteps, item use, weapon sounds), and dialogue. Each of the different sounds may be said to constitute a component of the output audio, and may or may not be comprised in its own audio channel, or track.

It has been found that when haptic feedback is generated on the basis of the master output, the resulting vibration can be muddled and noisy, thus hindering the purpose of conveying information to the user. However, in the present disclosure, the classification unit may be configured to determine which of the various sounds is the most prominent as basis for generation of haptic feedback. By determining a most prominent component of the audio present in the media content and generating haptic feedback based on that most prominent component, it is possible to provide relevant and highly targeted haptic feedback to accompany the media output. Haptics based on the most relevant sound in the game for that moment is communicated to the user, improving immersion as well as accessibility. Most importantly, this allows creators of media content to easily provide relevant haptic feedback to accompany media content, without having to manually design custom signatures for each environment.

The media content may be any type of content for which haptic feedback can be applied. For example, the media content may include be music, audiobooks, movies, interactive content such as slideshows, and most pertinently, video games. For the purposes of convenience and ease of reference, many aspects of the present disclosure will be described with reference to interactive content such as video games. However, it will be appreciated that the underlying principles of the invention can be applied to any media content.

The system may be configured to generate haptics signals in real time. That is to say that the input audio may be obtained as the media content is active and being delivered to the user. In the case of a video game, the audio output may be monitored as the game is being played, and the system may be configured to receive the audio as it is output from the game system. In some examples, the system may access an in-process audio output - that is, audio that is being processed and ready to be played, so that the haptics can be processed and delivered without significant (e.g. noticeable) delay or latency. In some examples, audio assets of a media content may be pre-processed using the system disclosed herein, to generate a pre-determined haptic signal to store (on a memory, for example) for later use.

As noted above, the one or more audio components may be contained in one or more separate audio channels. That is to say that each and every audio component may be in its own separate channel, or some may share channels and others in separate channels. The presence of each audio component in one or more channels may be stored as metadata such as channel information. The classification unit may be configured to use channel information as a factor in determining the most prominent component. For example, some or all of the channels may be classified according to the type or category of sound (e.g., BGM channel, foley channel, weapon sound channel, dialogue channel) or ranked in order of priority (e.g., highest priority to lowest priority). Channel information may be embedded in the audio components themselves, or may be obtained separately by the input unit. In some examples, the classification unit may be configured to ignore one or more predetermined audio channels. For example, the classification unit may be configured to ignore the background music channel.

In addition or alternatively (for example in the case where the channels are not classified, or not classified with sufficient accuracy), properties of the audio itself may be used to identify a prominent sound. Criteria that may indicate a prominent sound include one or more selected from the list consisting of whether:
i. a sound is above a threshold volume relative to the overall audio;
   a. Optionally in this case above a threshold volume over a predetermined proportion of its spectrum, so that it is noticeable by frequency even if not the loudest sound;
ii. a sound has a virtual source/locus that move relative to the virtual camera viewpoint;
iii. a sound has a virtual source/locus within a predetermined distance from a line emanating into the virtual environment from a centre point of the virtual camera (i.e. a virtual sound source close to the centre of the view, whether near or far);
   a. Optionally in this case also within a threshold radius from the position of the virtual camera and/or the position of a player avatar, if not in a first person view;
   b. Hence in either case, the content of at least one haptic channel is based at least in part on position information of the one of more audio tracks;
iv. a sound has a frequency component that overlaps with the frequency range of the haptic generator;
v. a sound has an envelope that can be replicated within the frequency range of the haptic generator; and
vi. a sound has a delta (change overtime) that is above a threshold value;
   a. Optionally in this case the delta may be that of the volume envelope and/or the pitch/spectral envelope.

Accordingly a sound (e.g. from one of the channels) may be selected as a prominent sound based on one or more of these criteria.

The system may also take into account information about the current state of the media content. The input unit may be further configured to obtain media data representative of the state of the media content. For the media content being a video game, the media data may comprise information about the game state and/or environment. Examples of such information include game title, platform, level, player state, events (past, current, and/or upcoming), weather, time of day, screen brightness levels, danger state, health points of players or characters, and the like. The classification unit may be configured to determine the most prominent audio component in dependence (at least in part) on the media data. In some examples where channel information is also available, the classification unit may combine channel information with media data representing information about the media content-for example, if the classification unit receives game data showing the game to be in a battle scene, it may decide to prioritise the audio channel for impact sound effects. Equally, for other media types such as movies, similar concepts can be applied - e.g., factoring in brightness of the scene or by semantic analysis of scene.

Similarly, the haptics generation unit may be configured to generate the output haptics signal in dependence (at least in part) on the media data and/or the channel information. For example, in the case where the sound of footsteps has been determined to be the most prominent audio component in a video game scene, the way those footsteps should be represented in a haptics signal may differ depending on the game state. Whilst in a bright space the movement of a character may be easily observed, at night in a dimly lit situation the footsteps may be emphasised to convey information about a character which may be visually less accessible.

The haptics generation unit may also factor in channel information when generating the haptics signal. For example, a particular style may be applied to the output haptic signal depending on the source of the audio component on which the haptic signal is based.

In some examples, the system may be configured for providing haptic feedback through multiple actuators. The haptics generation unit may be configured to output a multi-channel haptics signal. For example, where a video game controller comprises two haptics actuators - one on the left side and another on the right side of the controller - the haptics generation unit may generate a dual-channel output signal with one channel for the left haptics actuator and another for the right actuator. Directionality may also be taken into account, for example if direction information is embedded directly in the audio components, or if direction information is provided as part of media data obtained by the input unit. If the most prominent audio component is determined to be a sound originating from the right side of the player in the game environment, then the haptics generation unit may generate a higher amplitude signal in the right channel than the left channel of the output haptics signal.

The classification unit may be further configured to determine a second prominent audio component from the one or more audio components, for example using corresponding techniques to those used to determine the first prominent audio component. The haptics generation unit may be configured to generate the output haptics signal based on both the most prominent and the second prominent audio components. Similarly, the classification unit may determine third, fourth, or any plurality of prominent audio components, and the haptics generation unit may generate the output haptics signal based on any combination of the plurality of audio components. In this case however, typically at least one audio component of the overall audio (e.g. the master audio output) is not included as a prominent audio component (for example the background music, or a background environment audio effect that does not change, such as an air conditioner sound).

The classification unit may comprise, or have access to, a machine learning model trained to separate and/or classify all the audio components in a scene. A specialised machine learning model may be trained for each media content - for example one for each video game title. The ML system may be trained using the audio channels, media, game state, or other descriptors included herein as input, and with a previously selected prominent audio component identifier as the target output. Hence the ML system can learn the properties of a soundscape within the game title that are considered prominent. The ML system advantageously enables the classification unit to handle previously un-encountered combinations of audio, for example as may occur in multiplayer games, procedurally generated games, or games where the combinatorial possibilities within the available audio would be difficult to review in a practical manner.

In some examples, a machine learning neural network may be accessed by the classification unit to classify an audio component. The neural network may be trained on labelled sets of audio clips. For example, sets of audio clips relating to difference uses (e.g., background music, foley, impact, weapon use, etc) may be labelled as such and fed to the neural network for training such that the network is able to receive an unlabelled audio clip and classify it to one of the trained labels.

The haptics generation unit may generate the haptic signal in one or more of several different ways. In one example, the haptic generation unit may map the most prominent audio component to a haptic output by selection from a library of pre-determined haptic signals. The system may comprise, or have access to, a memory on which a library of labelled haptics signals is stored. The haptic generation unit may receive the most prominent audio component, determine one or more appropriate pre-determined haptics signals from the library and make a selection based on its analysis of the most prominent component. The haptics generation unit may simply output the one or more appropriately selected haptics signals, or alternatively the generation unit may be further configured to combine a plurality of selected haptics signals and output a mixed signal.

In another example, the haptics generation unit may be arranged to generate an output haptics signal based on attenuation of the waveform of the most prominent audio component. For example, the haptics generation unit may apply a low-pass filter to the most prominent component, or separate out low frequency effects, LFE, and/or other lower order channels from a multichannel audio component, or transpose an audio signal to a lower frequency - for example transpose the signal amplitude envelope to one or more lower driving frequencies within the range of the haptic generator.

In yet another example, the haptics generation unit may comprise, or have access to, a machine learning model trained to generate appropriate haptics signals based on an input of the most prominent audio component. The machine learning model may be stored on a memory either in the haptics generation unit or a separate memory accessible by the haptics generation unit. In some examples, such a machine learning model may comprise a neural network trained through input of a predetermined library of input audio signals and expected output haptics signals.

In another example still, the haptics generation unit uses a combination of two or more of the abovementioned techniques to generate the output haptics signal from the most prominent audio component.

The system may further comprise a controller. The controller may be a device operable to control, or interact with, the media content. Examples include remote controls, smartphones, buttons, and control pads such as the DualSense^{®} controller. The controller may comprise one or more haptics actuators configured to output haptics feedback in accordance with the output haptics signal from the haptics generation unit. The haptics generation unit may be located on the controller, or more typically may be located on a processor separate from, but accessible by, the controller. The input unit and classification unit may also be present on the controller, in which case the controller itself may be operable to receive an audio stream from the game being played, and output an appropriate haptic feedback in accordance with the disclosure. Where some or all of the units are separate from the controller, the controller may be in communication with other parts of the system, such as the haptics generation unit, classification unit and the input unit, via wired (e.g., USB cable) or wireless (e.g., Wi-Fi, Bluetooth, NFC) connection.

The controller may comprise multiple haptics actuators. Video game controllers often have a left actuator and a right actuator, to provide stereo haptic feedback to the player. In such cases, the output haptic signal may cause each of the multiple haptics actuators to output a different haptic feedback. For example, the haptics generation unit may be configured to generate a haptics signal comprising multiple channels, with each channel specified for a separate actuator on the controller.

In some situations, it may be desired to further isolate certain parts of one or more input audio components. In such a case, source separation may be utilised to separate out sub-components. One or more of the input unit and the classification unit may be configured to perform sound source separation on one or more of the audio components to generate sub-components. The classification unit my then be configured to determine a most prominent component from all available components and sub-components.

Optionally where a sound is identified as prominent for the purposes of driving either the left or right haptic actuator, the sound may also be treated as prominent to drive the other actuator (even if it would not otherwise meet the criterion for doing so) so that any subsequent stereo transition within the haptic actuators appears smooth. Hence for example a sound that has a current stereo mix so that it is prominent on the left but not on the right may be used to drive the left actuator, but the small right-hand audio component may still be used to drive the right actuator so that the haptics can smoothly mirror any subsequent change in audio balance. Consequently the content of at least one of the multiple haptic channels is based at least in part on position information (e.g. Stereo L-R) of the one of more audio tracks. Alternatively or in addition, the prominent audio may be evaluated in mono (i.e. by considering the sum of signals in a stereo, 2.1, 3.1, 5.1 or 7.1 audio mix).

According to another aspect of the disclosure, there is provided a method for providing haptic feedback accompanying media content, the method comprising the steps of: obtaining one or more audio components of the media content; determining, from the one or more audio components of the media content, a most prominent audio component representative of a scene in the media content, and generating an output haptics signal based on the most prominent audio component.

The method may comprise a step of performing sound source separation on one or more of the audio components to generate sub-components. In such a case, the step of determining a most prominent audio component may be done from all available audio components - that is, both the input audio components and the sub-components. In other words, the most prominent audio component may be determined from any identified input audio component and/or sub-component.

In some examples, the step of determining a most prominent audio component comprises assigning each of the one or more audio components a prominence value, and wherein the step of generating an output haptics signal is done based on a combination of audio components weighted by their prominence value.

It will be appreciated that any one or more of the features described above with respect to the first aspect of the disclosure may be adapted and applied to the second aspect. For example, the methods of the second aspect may be adapted to include steps to provide any one of the functionalities described above with respect to the systems of the first aspect, associated with similar technical advantages.

According to a third aspect, the present disclosure provides a computer program comprising instructions which, when executed by a computer of an audio-visual entertainment system, cause the computer to control the audio-visual entertainment system to perform a method according to the second aspect.

### BRIEF DESCRIPTION OF THE DRAWINGS

The invention will now be described by way of reference to the accompanying drawings, in which:
Figure 1 is a schematic illustration of an audio-visual entertainment system in association with which a method according to the invention may be implemented.
Figure 2 is a schematic illustration of an example system in an assembled configuration.
Figure 3 is a schematic illustration of an example method for providing haptic feedback accompanying media content.

### DETAILED DESCRIPTION OF EXAMPLES

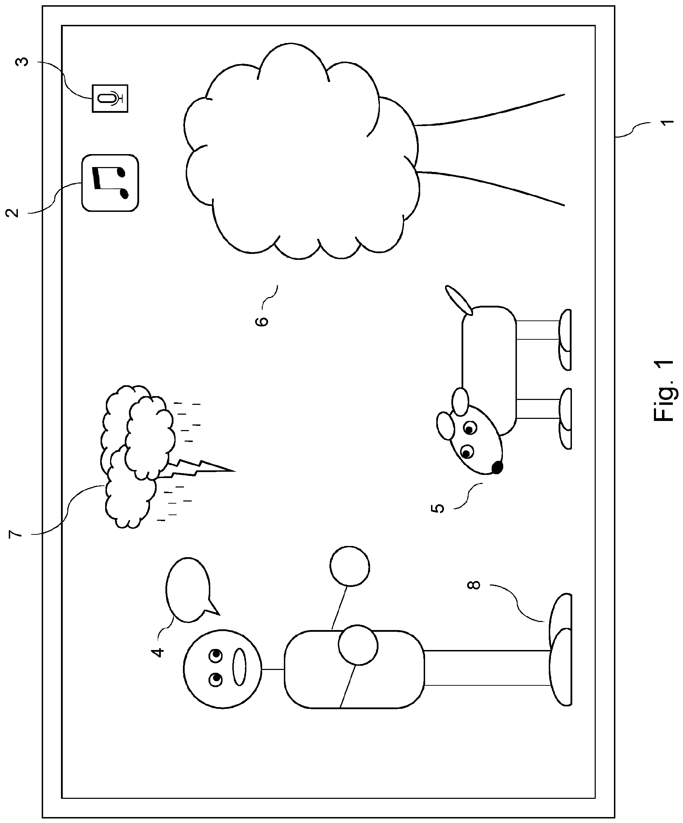

An aspect of the present disclosure is a system for providing haptic feedback accompanying media content. The media content may be played on an audio-visual entertainment system, such as a gaming console. An exemplary environment within such an audio-visual entertainment system is illustrated in Figure 1.

The example multi-media environment 1 comprises a variety of audio sources, each producing sounds, or audio components, to be played back through an audio output and transmitted to the user. The environment could be, for example, a scene in a motion picture such as a movie or a TV show, or a video game environment.

In this example, the scene is in a video game and comprises a speaking character outputting dialogue 4, an animal producing animal audio 5, weather and foliage producing atmospheric audio 6, and a weather event - e.g., lightning - generating audible thunder effects (event audio 7). Furthermore, background music 2 is playing, and a voice chat 3 associated with the game environment 1 also activated. Background music 2 is also associated with this game environment. The music 2 may be part of the game, or through an overlay, and may be pre-mixed.

Background music 2 is associated with the game environment. The background music 2 typically comprises one or more instrumental elements (e.g., strings, percussion, brass) and one or more voice elements. The music 2 can be pre-recorded music and can be stored and/or loaded as part of the game environment. Alternatively, or in combination, the music 2 can be music stored in other locations (for example in the user's personal data storage separate from the location of the game storage, or in a database accessible via a network). The music 2 can also be generated and/or mixed from constituent components in real-time, or procedurally generated by use of a neural network, for example. Each element of the background music 2 may be on a separate track or channel, or loaded within the game environment as a single pre-mixed track.

The character dialogue 4 comprises speech. The speech is generally derived from pre-recorded audio, for example from a voice over artist, and can be arranged to play back together with animation of the character model. In some examples the speech is procedurally generated, for example through a machine learning model utilising a neural network- which may generate the speech according to some input factors such as an event occurring or the user's actions in the game world.

Whilst in the example scene of Figure 1 the character is visible within the frame, in other examples the character dialogue 4 may equally be a narration, with the originating character (or voice over actor) not appearing in the scene. The in-game environment 1 can comprise multiple such characters outputting various different audible dialogues 4 as described above. The importance, or prominence, of each dialogue component may vary at different points or situations in the game. Similarly, the language of dialogue may affect the prominence of a dialogue component.

The environment also comprises other sources of audio. For example, the example scene 1 comprises an animal emitting barks and other animal-related sound effects 5. As with the character dialogue 4, such animal sound effects can accompany animation of the animal's visual model.

Other elements of the scene may also generate audible sound effects, such as weather and foliage. For example, rain, wind, and rustling of leaves on a tree can all contribute to such atmospheric sound effects 6. Whilst some weather effects are constant or last for a pre-determined period of time (such as rain), some other effects can be one-off events, or responsive to user action. For example, lightning can happen as a timed event or as an action in response to a user action, and can be accompanied by one-off event effects 7 such as thunder. Other examples of one-off sound effects 7 include user-triggered gunfire or the sound generated by impact of two or more objects (e.g., a sword hitting armour). The scene also includes character movement sounds 8 such as footsteps and foley, which indicate movement.

As noted above, the example video game environment 1 is also associated with audio from a voice chat 3. The voice chat functionality can be built-in to the video game environment, or a standalone process that runs concurrent with the game. The voice chat provides audio from user-input speech, typically picked up by an input device such as a microphone connected to a gaming system or associated peripherals. The voice chat audio 3 generally comprises speech, or dialogue, from other users.

It can be observed that the video game scene comprises many audio sources. For the purposes of illustration, this example video game scene is provided without any haptic feedback information (for example because it is an old title produced before the advent of modern haptic actuators on controllers). Conventionally, in order to retroactively add haptics to the game, a designer would manually have to go through the game and design a desired haptic feedback signal for each part of the game. This is laborious and inefficient. One aim of the present invention is to allow the generation of haptics signals by using the already available audio output as a starting point.

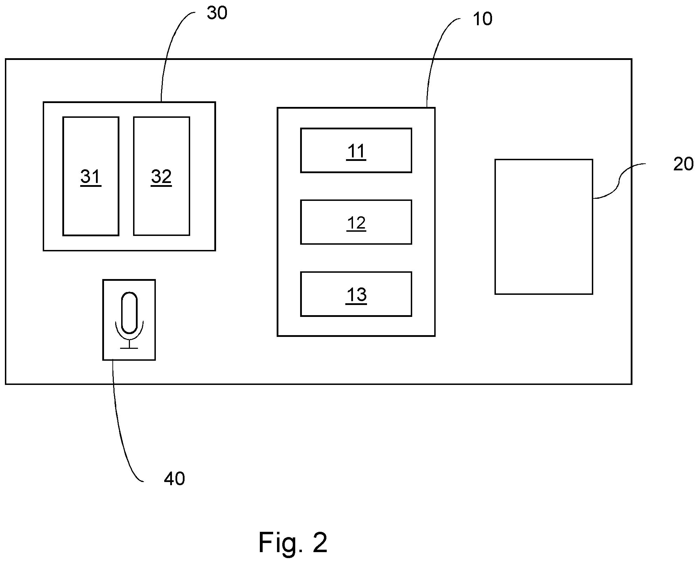

Figure 2 is a schematic block diagram of an example system 10 configured to take in the audio of the video game scene 1 and to output an appropriate haptics signal to be delivered to a user of the game. The features of Figure 2 may be located in a video game system such as a console or computer.

The example illustrates a video game console configured to generate graphics, audio and control functionalities necessary for loading a game environment such as that illustrated in Figure 1. The console is connected to a peripheral 30 - in this example a controller used to operate the game environment. The peripheral 30 can take the result of processing by the system 10 to output the haptic feedback through multiple haptics actuators 31, 32. The haptics actuators 31, 32 may for example be left 31 and right 32 actuators located on the controller, operable through left and right haptics channels respectively. Whilst the system 10 is illustrated in Figure 1 as being separated from the gaming system 20 these two can also be integrated as part of a single system, and can also be integral with audio system 30 and microphone 40. The system 10 could also be part of a cloud network connected to multiple gaming systems 20 through a network connection and arranged to provide remote processing to multiple such gaming systems 20.

The example system 10 is configured for providing haptic feedback from audio associated with a video game environment, and comprises an input unit 11, a classification unit 12, and a haptics generation unit 13.

The input unit 11 is configured to obtain game audio and obtain the available audio components for use by the rest of the system. The game audio typically consists of all of the audio described above with reference to Figure 1, although some components may be inaccessible or disregarded. For the purposes of this example, each of the music 2, voice chat 3, dialogue 4, animal sounds 5, atmospheric sounds 6, events 7, and foley 8 are considered to be separate audio components. The input unit 11 typically obtains all audio components. In some examples, the input unit 11 can assess a particular component and decide to discard (or not pass to the classification unit 12). In some examples, the input unit 11 can also be configured to obtain game data representative of the status of in-game objects and environments.

The classification unit 12 is configured to receive the audio components obtained by the input unit 11, and to determine a most prominent component from all the available components, for example as described elsewhere herein. The most prominent component can be thought of as the audio most relevant for the user to feel through tactile feedback. Relevance is used in this context as the measure of how important it is that a particular audio component is communicated to the user through tactile feedback, at that particular moment in the gameplay. It will often depend on the situation in the game - for example, when the main activity the in-game player is undergoing is traversal, footsteps may be the most relevant detail to be felt by the user. When the player is battling another, the sound of melee weapons or bullets hitting the player may be the most relevant aural detail that can be transferred to the user. The classification unit 12 is configured to determine which of the currently active audio components is most relevant. For this, the classification unit 12 may not only factor in the audio components but optionally also game data, representative of the current events and status of the game environment.

In some examples, the classification unit 12 may comprise, or have access to, a machine learning model trained to classify audio components, as described elsewhere herein. The machine learning model may be trained on a library of labelled and pre-determined audio components. The pre-determined audio components may be labelled and ranked for example by relevance to haptic feedback generation. The audio components may also be labelled by relevance to game data - for example labelled by relevance to certain in-game events (e.g., battle, traversal, dialogue).

The haptics generation unit 13 is configured to receive the most prominent audio component and generate an output haptics signal based at least on the most prominent audio component.

Once the most prominent audio component is determined by the classification unit 12, a haptics signal for output can be generated by the haptics generation unit 13 as described elsewhere herein. Haptic feedback can be generated on the basis of the most prominent audio component in different ways.

The haptics generation unit 13 can comprise, or have access to, a memory containing a library of pre-determined haptic signals. The library haptic signals may be labelled for example by use case, length, pitch, amplitude, and the like. The haptics generation unit 13 can be configured to match the most prominent audio component to one or more of the library haptic signals based on metadata of each. The haptics generation unit 13 can then either select the one or more matched library haptic signals to be the output haptics signal, or it may edit or attenuate the matched signals. For example, if multiple matched signals are selected, the generation unit 13 can mix a combination of the multiple signals.

The audio output unit 13 can also be configured to split parts of the output haptics signal into multiple channels and arrange them for output at different actuators - for example left actuator 31 and right actuator 32.

In use, the gaming system 20 generates a game environment 1 having multiple sources of audio such as background music 2, dialogue 4 and foley 8. The output audio is obtained by the input unit 11 and the classification unit 12 determines the most prominent component for that scene. The haptics generation unit 13 then takes the most prominent component and generates an output haptics signal to be implemented at actuators 31, 32 on the connected controller 30 to accompany the output game.

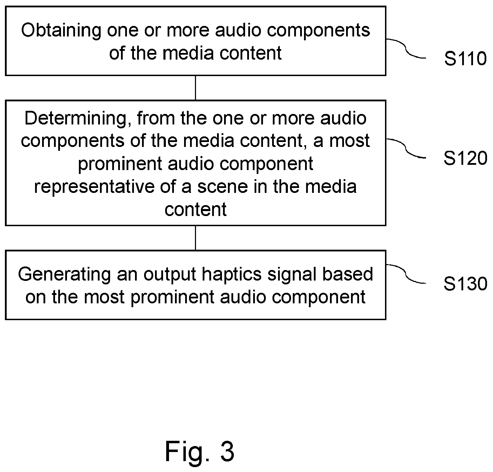

Figure 3 is a flow chart schematically illustrating steps of an example method as disclosed herein.

At step S110, one or more audio components of a media content is obtained, as described elsewhere herein. In some examples, the media content is a video game being played by a user. This step can be performed by an input unit of the type described herein for example with reference to Figure 2. In other words, the step S110 can be implemented by configuring or controlling an input unit 11 to obtain one or more audio components of the media content. In some examples, the step can comprise a sub-step of obtaining media data indicative of a current state of the media content. When the media content is a video game, the media data can be game data, indicative of current game state including information relating to graphics and audio output of the game.

At step S120, a most prominent audio component, representative of a scene in the media content, is determined from the one or more audio components obtained in step S110, as described elsewhere herein. The scene may be a current scene -that is to say that the step may be performed in real-time as the media content is being delivered. This step can be performed by a classification unit of the type described herein for example with reference to Figure 2. In other words, the step S120 can be implemented by configuring or controlling a classification unit 12 to determine a most prominent audio component representative of the scene. The step can also comprise a sub-step of determining a second prominent audio component, or a plurality of audio components ranked by prominence. One or more of the obtained audio components can be assigned a prominence value at this step. Where media data has been obtained as part of S110, the step S120 can comprise determining the most prominent audio component based on the obtained media data.

The method can also comprise a step of performing sound source separation on one or more of the audio components obtained in step S110, to generate sub-components. In such a case, step S120 can further comprise a sub-step of determining a most prominent audio component from all available audio components - that is, from the obtained audio components and the generated sub-components.

At step S130, an output haptics signal is generated based on the most prominent audio component, as described elsewhere herein. This step can be performed by a haptics generation unit of the type described herein for example with reference to Figure 2. In other words, the step S130 can be implemented by configuring or controlling a haptics generation unit 13 to generate an output haptics signal based on the most prominent audio component.

When step S120 comprises assigning a prominence value to one or more of the audio components, step S130 can comprise generating an output haptics signal based on a combination of audio components weighted by their prominence value.

It will be appreciated that the above methods may be carried out on conventional hardware suitably adapted as applicable by software instruction or by the inclusion or substitution of dedicated hardware, as described elsewhere herein.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system for providing haptic feedback accompanying media content, the system comprising:
an input unit configured to obtain one or more audio components of the media content;
a classification unit configured to determine, from the one or more audio components, a most prominent audio component representative of a scene in the media content, and
a haptics generation unit configured to generate an output haptics signal based on the most prominent audio component.

2. The system according to claim 1, wherein the one or more audio components are contained in one or more separate audio channels.

3. The system according to any of claims 1 and 2, wherein the classification unit is configured to determine the most prominent audio component based on audio channel information indicating a category of sound in a respective audio channel.

4. The system according to any of the preceding claims, wherein the classification unit is configured to determine the most prominent audio component based on input media data representative of the media content.

5. The system according to claim 4, wherein the media content is a video game content, and the input media data comprises data relating to the state of the video game environment.

6. The system according to any preceding claim, wherein the haptics generation unit is configured to output a multichannel haptics signal.

7. The system according to claim 6, wherein the content of at least one of the multiple channels is based at least in part on position information of the one of more audio tracks.

8. The system according to any preceding claim, wherein the classification unit is further configured to determine a second prominent audio component from the one or more audio components, and wherein the haptics generation unit is configured to generate the output haptics signal based on both the most prominent and the second prominent audio components.

9. The system according to any preceding claim, further comprising a controller, the controller comprising one or more haptics actuators configured to output haptic feedback in accordance with the output haptics signal from the haptics generation unit.

10. The system according to claim 9, wherein the controller comprises multiple haptics actuators, and the output haptics signal causes each of the multiple haptics actuators to output a different haptic feedback.

11. A method for providing haptic feedback accompanying media content, the method comprising the steps of:
obtaining one or more audio components of the media content;
determining, from the one or more audio components of the media content, a most prominent audio component representative of a scene in the media content, and
generating an output haptics signal based on the most prominent audio component.

12. The method according to claim 11, further comprising the step of performing sound source separation on or one or more of the audio components to generate sub-components, and wherein the step of determining a most prominent audio component comprises selection from both the input audio components and the sub-components.

13. The method according to any of claims 11 and 12, wherein the step of determining a most prominent audio component comprises assigning each of the one or more audio components a prominence value, and wherein the step of generating an output haptics signal is done based on a combination of audio components weighted by their prominence value.

14. The method according to any of claims 11 to 13, further comprising the step of sending the output haptics signal to one or more haptics actuators, to deliver haptic feedback concurrent to the media content.

15. A computer program comprising instructions which, when executed by a computer of an audio-visual entertainment system, cause the computer to control the audio-visual entertainment system to perform a method according to any of claims 11 to 14.
